# EUROPÄISCHE PATENTSCHRIFT

(11) **EP 1 671 707 B1**
(45) Veröffentlichungstag und Bekanntmachung des Hinweises auf die Patenterteilung: **31.12.2008**
(21) Anmeldenummer: 05023923.5
(22) Anmeldetag: 03.11.2005
(51) Int. Cl.: B05C 11/00, B65H 20/00, G01M 9/04

(54) **Vorrichtung zum Absaugen einer wandnahen Luftgrenzschicht**
Apparatus for sucking an air boundary layer
Dispositif d'aspiration d'une couche limite d'air

(30) Priorität: 20.12.2004 DE 102004062330
(43) Veröffentlichungstag der Anmeldung: 21.06.2006
(73) Patentinhaber: TLT-Turbo GmbH, 66482 Zweibrücken (DE)
(72) Erfinder: Wolfanger, Thomas, 66540 Neunkirchen (DE)
(74) Vertreter: Radünz, Ingo

(56) Entgegenhaltungen:
- WO-A-87/04243
- DE-A1- 10 037 928
- FR-A1- 2 534 686

## Beschreibung

Die Erfindung betrifft eine Vorrichtung zum Absaugen einer wandnahen Luftgrenzschicht aus einer Strömung mit den Merkmalen des Oberbegriffes des Anspruches 1.

Zum Absaugen einer aus ruhender Luft mitgeschleppten Luftgrenzschicht von einer laufenden Materialbahn vor deren Beschichtung mit einem Überzug ist eine Vorrichtung bekannt (WO 02/081102 A1), die einen zur Materialbahn hin offenen Saugkasten aufweist. Der Saugkasten ist im Bereich der die Materialbahn umlenkenden Rolle angeordnet und mit einer einlaufseitigen und einer auslaufseitigen lippenartigen Dichtung versehen. Die Dichtungen weisen an ihrem Einlauf- und Auslaufende jeweils eine scharfe Kante auf.

Störende Luftgrenzschichten entstehen auch innerhalb der Messstrecke von Windkanälen zur aerodynamischen Untersuchung an Fahrzeugen oder Flugzeugen. Hier wird mit Hilfe einer bewegten Wand ("Rollendes Band") eine Straße simuliert, bei der anstelle des in der Realität sich bewegenden Fahrzeuges auf ruhender Straße dem ruhenden Wind nunmehr ein ruhendes Fahrzeug auf sich bewegender Straße dem sich bewegendem Wind ausgesetzt wird. Da die Strömungsgeschwindigkeit in der Luftgrenzschicht stromauf des "Rollenden Bandes" geringer ist als in der freien wandentfernten Strömung im Windkanal, ist es notwendig, die in die Messstrecke eintretende Strömung auf der Bodenseite von der entstehenden Luftgrenzschicht zu befreien. Hierzu lässt sich ein Saugkasten ähnlich dem aus der WO 02/081102 A1 bekannten Saugkasten verwenden. Allerdings muss der Saugkasten so verbessert werden, dass dieser nicht nur zur Rolle sondern auch zu der Strömung hin offen ist, die der bewegten Wand zugeführt wird.

In der DE 100 37 928 A1 ist eine gattungsgemäße Vorrichtung zum Absaugen von Strömungsgrenzschichten in Windkanälen beschrieben.

Die mit Durchtrittsöffnungen versehene Absaugeplatte der Absaugevorrichtung ist vertikal oberhalb eines Absaugeschachtes angeordnet und reicht bis an die Umlenkrolle heran, um die ein Laufband geführt ist. Die Umlenkrolle ist in Richtung auf die Absaugevorrichtung verschiebbar. Der Übergang vom Ende der Absaugeplatte zum Laufband ist durch eine auf dem Laufband aufliegende Lippe sorgfältig abgedichtet.

Der Erfindung liegt die Aufgabe zugrunde, die gattungsgemäße Vorrichtung so zu gestalten, dass die mit der Strömung ankommende Luftgrenzschicht effektiv beseitigt und der unten liegende frei bleibende Spalt zwischen der Rolle und der Absaugeeinrichtung kontrollierbar ist.

Die Aufgabe wird bei einer gattungsgemäßen Vorrichtung erfindungsgemäß durch die kennzeichnenden Merkmale des Anspruches 1 gelöst. Vorteilhafte Ausgestaltungen der Erfindung sind Gegenstand der Unteransprüche.

Die erfindungsgemäße Vorrichtung kommt ohne eine lippenartige Dichtung zur Abdichtung des frei bleibenden Spaltes zwischen der Absaugeeinrichtung und der Rolle aus. Das Weglassen der lippenartigen Dichtung bewirkt, dass sich stromab der Absaugung keine neue Luftgrenzschicht mehr bilden kann. Der unten liegende frei bleibende Spalt liegt bei der erfindungsgemäßen Vorrichtung im Absaugebereich, wodurch der Einfluss des unten liegenden Spaltes eliminiert wird.

Ein Ausführungsbeispiel der Erfindung ist in der Zeichnung dargestellt und wird im Folgenden näher beschrieben. Es zeigen
Fig. 1 eine Vorrichtung zum Absaugen einer Luftgrenzschicht und

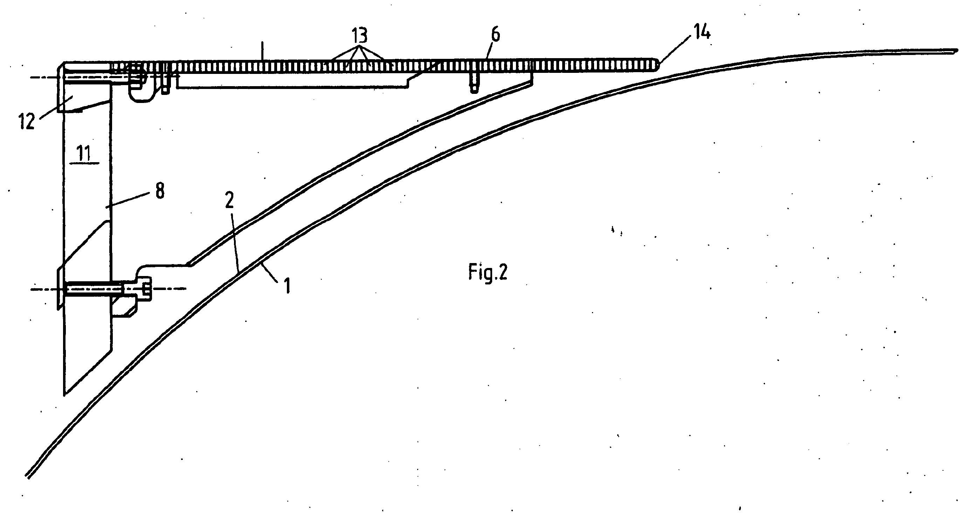

Fig. 2 die Einzelheit Z nach Fig. 1.

Eine Messstrecke zur aerodynamischen Untersuchung eines Fahrzeuges innerhalb eines Windkanals enthält eine angetriebene Rolle 1. Um die angetriebene Rolle 1 und eine nicht gezeigte, in einem Abstand angeordnete Umlenkrolle ist ein endloses Band 2 geführt, das bei einer Drehung der angetriebenen Rolle 1 entlang einer waagerechten Strecke bewegt wird und über die Umlenkrolle zurück zur angetriebenen Rolle 1 läuft. Das Band 2 läuft als "Rollendes Band" unter dem in dem Windkanal zu testenden Fahrzeug hindurch und stellt damit für das ruhende Fahrzeug eine bewegte Wand oder Straße dar. Dem Band 2 wird strömende Luft in Form einer Strömung zugeführt, die sich mit der gleichen Geschwindigkeit wie das Band 2 bewegt. Auf diese Weise wird ein fahrendes Fahrzeug auf einer ruhenden Straße und bei ruhendem Wind simuliert.

Die Strömung tritt aus einer Düse aus und wird dem Band 2 zugeführt, das die Strömung unten begrenzt. Die Strömung weist eine bodennahe Luftgrenzschicht 3 auf, deren Geschwindigkeit geringer ist als die der vom Boden entfernteren Strömungsschicht 4. Da die aerodynamische Untersuchung eine über die Höhe gleichmäßige Strömung verlangt, wird die störende Luftgrenzschicht 3 durch die in der Zeichnung dargestellte und nachfolgend beschriebene Absaugeeinrichtung abgesaugt.

Die Absaugeeinrichtung ist in dem oberen Bereich der Rolle 1 angeordnet, in dem das Band 2 in die Waagerechte umgelenkt wird. Die Absaugeeinrichtung besteht aus einem Saugkasten 5 und einer Absaugeplatte 6. Der Saugkasten 5 ist eine Rahmenkonstruktion mit einer rückwärtigen, der Rolle 1 abgewandten Seite 7 und einer der Rolle 1 zugewandten Frontseite 8. In den Saugkasten 5 sind Strömungsleitbleche 9 eingebaut, die einen zu einem Sauggebläse führenden Absaugkanal 10 bilden und die die abgesaugte Luft strömungsgünstig führen. Die Strömungsleitbleche 9 sind an eine Öffnung in einer den Absaugkanal 10 an der Frontseite 8 des Saugkastens 5 verschließenden Frontplatte 12 angeschlossen.

Die Absaugeplatte 6 ist seitlich mit dem Saugkasten 5 verbunden und an der Frontplatte 12 befestigt. Die Absaugeplatte 6 liegt in der Ebene des waagerecht verlaufenden Teiles des Bandes 2, der die bewegte, eine Straße simulierende Wand darstellt. Die Absaugeplatte 6 ist mit Durchtrittsöffnungen 13 versehen, die senkrecht zu der Strömungsrichtung der Strömung verlaufen. Die Absaugeplatte 6 reicht mit der Vorderkante 14 bis nahe an den Umfang der Rolle 1 heran und überbrückt so den Raum zwischen der Frontseite 8 des Saugkastens 5 und der Rolle 1. Zwischen der Vorderkante 14 der Absaugplatte 6 besteht ein Spalt, der als oben liegender Spalt oder Lippenspalt bezeichnet wird.

Die Vorderkante 14 der Absaugeplatte 6 ist abgerundet, wobei die Abrundung vorzugsweise halbkreisförmig ausgebildet ist. Bei einer Dicke der Absaugeplatte 6 von 4 mm beträgt der Krümmungsradius der Vorderkante 14 gerade 2 mm. Der Abstand der abgerundeten Vorderkante 14 der Absaugeplatte 6 von der Rolle 1 beträgt in radialer Richtung der Rolle 1 gesehen etwa 5 mm.

An der Frontplatte 12 und einem unterhalb der Frontplatte 12 liegenden Teil der Rahmenkonstruktion des Saugkastens 5 ist eine Abdeckung 15 befestigt. Die Abdeckung 15 ist der Krümmung der Rolle 1 angepasst und umschließt in einem geringen Abstand die Rolle 1 auf einem Teil ihres Umfanges unterhalb der Absaugeplatte 6. Auf diese Weise entsteht ein unten liegender Spalt, der sich im Absaugebereich der Absaugeinrichtung befindet. Dieser zur Rolle 1 hin offene Absaugebereich ist durch den oben liegenden Lippenspalt und dem unten liegenden Spalt begrenzt.

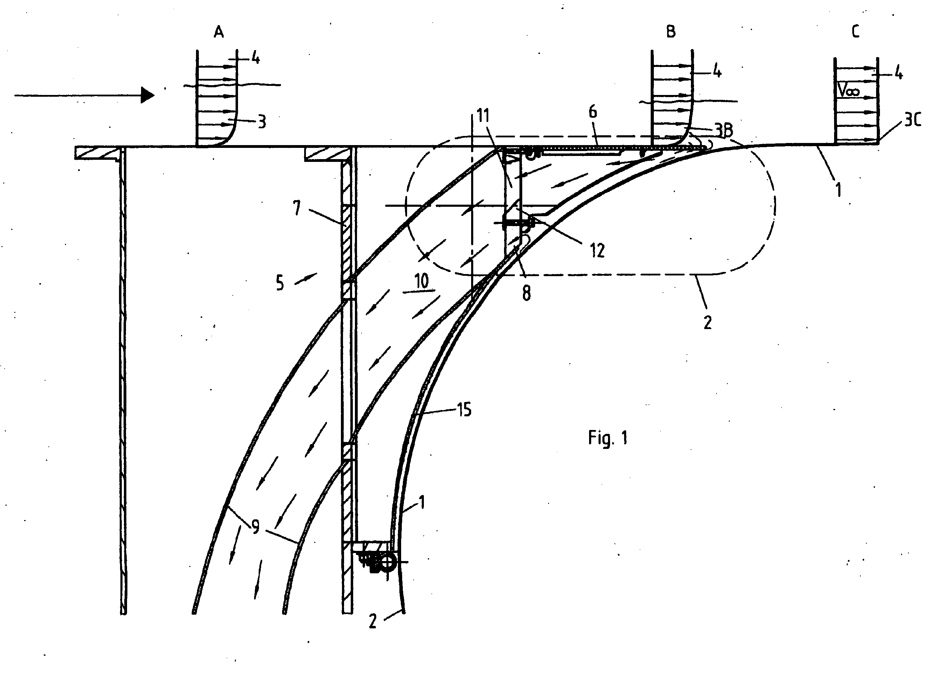

In den oberen Teil der Fig. 1 ist das Profil der Strömung in drei verschiedenen Stadien A, B und C gezeigt. Das Stadium A gibt den Ausgangszustand der Strömung wieder. Er zeigt eine ausgeprägte Luftgrenzschicht 3 unterhalb der gleichmäßigen Strömungsschicht 4. Durch das Absaugen von Luft aus der Luftgrenzschicht 3 oberhalb der Absaugeplatte 6 wird die Dicke der Luftgrenzschicht 3B zunehmend verkleinert (Stadium B).

Oberhalb der bewegten Wand ist nur noch eine residuale Luftgrenzschicht 3C vorhanden (Stadium C).

Erreicht wird die residuale Luftgrenzschicht 3C durch die Ausbildung und die Anordnung der Absaugeplatte 6 der Absaugeeinrichtung. Die Pfeile in Fig. 1 geben die Strömungsrichtung der angesaugten Luft aus der Luftgrenzschicht 3 wieder. Die abgesaugte Strömung wird um die abgerundete Vorderkante 14 der Absaugeplatte 6 durch den oben liegenden Lippenspalt auf die Unterseite der Absaugeplatte 6 gezwungen.
Die um die Vorderkante 14 der Absaugeplatte 6 gezwungene Luft wird zusammen mit der durch die Absaugeplatte 6 abgesaugten Luft der Luftgrenzschicht 3 dem Absaugekanal 10 des Saugkastens 5 zugeführt.

An dem unten liegenden Spalt zwischen der Abdeckung 15 und der Rolle 1 gibt es direkt über dem an der Rolle 1 anliegenden Band 2 einen sehr kleinen Bereich einer Strömung, der vom Band 2 mitgerissen wird. Unmittelbar über diesem Bereich strömt die Luft aus der Luftgrenzschicht 3 in die entgegengesetzte Richtung. An einer bestimmten Stelle auf der Rolle 1 unterhalb der Absaugeplatte 6 gibt es einen Staupunkt, der die vom Band 2 mitgeschleppte Luft "abriegelt" und damit verhindert, dass eine Störung der reduzierten Luftgrenzschicht 3 eintritt oder dass sich stromab der Absaugeplatte 6 eine Luftgrenzschicht neu bildet.

## Patentansprüche

1. Vorrichtung zum Absaugen einer wandnahen Luftgrenzschicht (3) aus einer Strömung, die einer mit der Strömung parallel bewegten und die Strömung begrenzenden Wand zugeführt wird, die durch ein um eine Rolle (1) geführtes, endloses Band (2) gebildet ist, wobei in dem Umlenkbereich der Rolle (1) eine Absaugeinrichtung angeordnet ist, die aus einem mit einem Absaugekanal (10) versehenen Saugkasten (5) und aus einer Absaugeplatte (6) besteht, die mit senkrecht zur Richtung der Strömung verlaufenden Durchtrittsöffnungen (13) versehen und in der Ebene der bewegten Wand angeordnet ist, wobei die Absaugeplatte (6) seitlich mit dem Saugkasten (5) verbunden ist, **dadurch gekennzeichnet, dass** die Absaugeplatte (6) den Raum zwischen der Rolle (1) und der Frontseite (8) des Saugkastens (5) überbrückt, dass die Vorderkante (14) der Absaugeplatte (6) abgerundet ist und dass in radialer Richtung der Rolle (1) gesehen zwischen der abgerundeten Vorderkante (14) der Absaugeplatte (6) und dem Umfang der Rolle (1) ein Abstand von etwa 5mm eingehalten ist.

2. Vorrichtung nach Anspruch 1, **dadurch gekennzeichnet, dass** die Abrundung der Vorderkante (14) der Absaugeplatte (6) halbkreisförmig ausgebildet ist.

## Claims

1. Apparatus for sucking of near-wall air boundary layer (3) from a flow which is led to a wall moved in parallel with the flow and delimiting the flow, which is formed by an endless belt (2) guided around a roll (1), wherein in the return area of roll (1) a suction device is arranged which consists of a suction box (5) provided with suction channel (10) and of suction plate (6) which is provided with passage openings (13) running perpendicular to the direction of flow and is arranged at the level of the moved wall, wherein the suction plate (6) is laterally connected with the suction box (5), **characterized in that** the suction plate (6) bridges the space between the roll (1) and front side (8) of the suction box (5), that front edge (14) of the suction plate (6) is rounded and that, seen in radial direction of the roll (1), a distance of about 5mm is maintained between the rounded front edge (14) of the suction plate (6) and the circumference of the roll (1).

2. Apparatus according to claim 1, **characterized in that** the rounding of the front edge (14) of the suction plate (6) has a semicircular form.

## Revendications

1. Dispositif d'aspiration d'une couche-limite d'air (3) proche d'une paroi dans un écoulement, qui est amenée sur une paroi limitant l'écoulement et déplacée parallèlement à l'écoulement, ladite paroi étant formée par une bande infinie (2) guidée autour d'un rouleau (1), moyennant quoi dans la zone de déviation du rouleau (1) un dispositif d'aspiration est disposé, lequel est constitué d'un caisson d'aspiration (5) pourvu d'un canal d'aspiration (10) et d'une plaque d'aspiration (6), laquelle est pourvue d'ouvertures traversantes (13) s'étendant perpendiculairement à la direction d'écoulement et est disposée dans le plan de la paroi déplacée, moyennant quoi la plaque d'aspiration (6) est reliée latéralement au caisson d'aspiration (5), **caractérisé en ce que** la plaque d'aspiration (6) enjambe l'espace entre le rouleau (1) et le côté avant (8) du caisson d'aspiration (5), **en ce que** l'arête avant (14) de la plaque d'aspiration (6) est arrondie et **en ce que** un espacement d'environ 5mm est délimité, vu dans la direction radiale du rouleau (1), entre l'arête avant arrondie (14) de la plaque d'aspiration (6) et la circonférence du rouleau (1).

2. Dispositif selon la revendication 1, **caractérisé en ce que** l'arrondissement de l'arête avant (14) de la plaque d'aspiration (6) est réalisé en forme de demi-cercle.
